# EUROPÄISCHE PATENTSCHRIFT

(11) **EP 3 157 795 B1**
(45) Veröffentlichungstag und Bekanntmachung des Hinweises auf die Patenterteilung: **22.04.2020**
(21) Anmeldenummer: 15729163.4
(22) Anmeldetag: 15.06.2015
(51) Int. Cl.: B61D 17/20

(54) **SCHIENENFAHRZEUGPORTALFAHRWERK**
RAIL VEHICLE GANTRY CHASSIS
TRAIN DE ROULEMENT À PORTIQUES POUR VÉHICULES FERROVIAIRES

(30) Priorität: 17.06.2014 AT 504222014
(43) Veröffentlichungstag der Anmeldung: 26.04.2017
(73) Patentinhaber: Siemens Mobility Austria GmbH, 1210 Wien (AT)
(72) Erfinder: RITTENSCHOBER, Andreas, 1200 Wien (AT)
(74) Vertreter: Deffner, Rolf
(86) Internationale Anmeldenummer: PCT/EP2015/063331
(87) Internationale Veröffentlichungsnummer: WO 2015/193236

(56) Entgegenhaltungen:
- EP-A2- 0 443 309
- EP-A2- 1 180 462
- WO-A1-87/05873
- DE-A1- 2 512 008
- US-A- 2 954 746

## Beschreibung

### Technisches Gebiet

Die Erfindung betrifft ein Portalfahrwerk für ein Schienenfahrzeug, insbesondere für eine Straßenbahn.

### Stand der Technik

Portalfahrwerke werden vorzugsweise bei langsamfahrenden Schienenfahrzeugen für den Nahverkehr mit einer hohen Passagierwechselrate eingesetzt, da sie spezifische, für diesen Einsatzzweck vorteilhafte Eigenschaften aufweisen. Mit Portalfahrwerken können durchgehend ebene und sehr niedrig angeordnete Passagierraumböden realisiert werden. Alternativ dazu können auch Portalachsen eingesetzt werden, welche einen in Richtung der Schienenebene versetzten Mittelteil aufweisen und einzeln gelagerte Räder an kurzen senkrechten Abschnitten der Achse. Mittels Portalachsen kann jedoch kein so niedrig liegender Passagierraumboden erzielt werden wie er bei modernen Straßenbahnen oftmals gewünscht ist. Durch den Einsatz von Portalfahrwerken kann bei einer Straßenbahn eine typische Passagierraumbodenhöhe von 20cm über der Schienenoberkante erreicht werden, was einen besonders guten Einstiegskomfort für die Passagiere bedeutet. Für die Fahrsicherheit ist es wesentlich, dass die Räder um die Vertikal- sowie die globale Längsachse des Fahrzeugs hinreichend stabil geführt werden. Portalfahrwerke weisen Räder auf, welche an kurzen Achsstummeln oder mittels Wellen drehbar gelagert sind, wobei die Tragelemente für die Achsstummel (bzw. Wellen) meist vertikal verschiebbar aber um die globale Längsachse des Fahrzeugs nicht verdrehbar mit dem Portalrahmen verbunden sind um eine Federung und gleichzeitig eine stabile Führung des Rades realisieren zu können. Zusätzlich ist die Spurweite während des Fahrbetriebes konstant zu halten. Dazu ist bei bekannten Portalfahrwerken eine mechanische Querverbindung vorgesehen, welche die Tragelemente für die Achsstummel (bzw. Wellen) bzw. die schienenseitigen Enden des Portalrahmens verbindet und solcherart eine Veränderung der Spurweite unterbindet. Diese Querverbindung ist dabei mittels eines momentenfreien Lagers (sphärisches Lager) mit den Tragelementen für die Achsstummel bzw. den schienenseitigen Enden des Portalrahmens verbunden und über Lenker (Zugstangen) an den Wagenkasten angebunden. Diese aufwendige Konstruktion bedingt einen hohen Wartungsaufwand und erfordert weiters einen außerordentlich großen Aufwand bei der Installation und Inbetriebnahme.

Das Dokument WO 87/05873 A1 beschreibt ein konventionelles Schienenfahrzeugportalfahrwerk, umfassend einen Portalrahmen aus einem waagrechten und zwei senkrechten Abschnitten und an diesen senkrechten Abschnitten angeordnete Räder. Die offenen Enden des Portalfahrwerks sind mittels Zugstreben verbunden.

### Darstellung der Erfindung

Der Erfindung liegt daher die Aufgabe zugrunde, ein Portalfahrwerk für ein Schienenfahrzeug anzugeben, welches eine stabile Führung der Räder und die Aufrechterhaltung der Spurweite unter allen Betriebsbedingungen gewährleistet und dabei einfacher und kostengünstiger aufgebaut ist als Portalfahrwerke nach dem Stand der Technik.

Die Aufgabe wird durch ein Schienenfahrzeugportalfahrwerk mit den Merkmalen des Anspruchs 1 gelöst. Vorteilhafte Ausgestaltungen sind Gegenstand untergeordneter Ansprüche.

Dem Grundgedanken der Erfindung nach wird ein Schienenfahrzeugportalfahrwerk aufgebaut, welches einen Portalrahmen aus einem waagrechten und zwei senkrechten Abschnitten und an diesen senkrechten Abschnitten angeordnete Räder umfasst, wobei die senkrechten Abschnitte mittels einer blattfederartig ausgebildeten Querspange fest und lösbar verbunden sind, wobei die Querspange bei Betriebsbelastungen des Schienenfahrzeugs einer elastischen Verformung unterworfen ist.

Dabei ist der waagrechte Abschnitt an dem, dem Schienenniveau abgewandten Ende des Portalrahmens angeordnet und die senkrechten Abschnitte verlaufen von der Portalmitte am weitesten Punkt entfernt. Dadurch weist der Portalrahmen eine hinreichende innere Weite auf, sodass ein Wagenkasten, bzw. ein Passagierübergang durch ihn hindurch geführt werden kann. Dabei können die Räder an Achsstummeln, welche mittels Tragelementen an den senkrechten Abschnitten befestigt sind angeordnet sein.

Dadurch ist der Vorteil erzielbar, die Spurweite unter allen Betriebslasten sicher beizubehalten und dabei aufwendige und teure sphärische Gelenke entfallen lassen zu können. Erfindungsgemäß ist das Portalfahrwerk mit einer Querspange ausgestattet, welche die senkrechten Abschnitte des Portalrahmens (die Tragelemente für die Achsstummel) verbindet. Diese Verbindung erfolgt zweckmäßigerweise am den dem Schienenniveau zugewandten Enden der Tragelemente für die Achsstummel (bzw. den senkrechten Abschnitte des Portalrahmens, wobei diese Verbindung lösbar und fest auszuführen ist. Solcherart können die Enden der Querspange an diesen Verbindungen Verdrehungen um die Längsachse des Schienenfahrzeugs erfahren. Diese Verdrehungen entstehen insbesondere bei asymmetrischem Einfedern (durch asymmetrische Beladung oder Kurvenfahrt) einer üblicherweise vorhandenen Federung zwischen den Tragelementen für die Achsstummel und dem Portalrahmen. Durch die biegeweiche Ausführung der Querspange nimmt diese die Verformungen elastisch auf, sodass eine sphärische Lagerung an den Verbindungsstellen zwischen der Querspange und den senkrechten Abschnitten entfällt. Diese Verbindung kann vorzugsweise als Schraubverbindung ausgeführt werden und ist so zu dimensionieren, dass die über die Querspange geleiteten Zugkräfte in die senkrechten Abschnitte des Portalrahmens bzw. die Tragelemente für die Achsstummel eingeleitet werden können. Die stabile Führung der Räder um die globale Längsachse des Schienenfahrzeugportalfahrwerks wird ausreichend durch den Portalrahmen in Verbindung mit den Tragelementen für die Achsstummel gewährleistet, sodass die Querspange dazu keinen Beitrag leisten muss.

Die Erfindung sieht vor, die Querspange blattfederartig auszubilden, wobei sie plattenförmig geformt sein kann. Alternativ dazu ist eine Ausführung in Form eines oder mehrerer Biegestäbe vorteilhaft. Eine hinreichend elastische Ausführung der Querspange ist dabei wesentlich, sodass eine Verdrehung der Querspange um die Fahrzeuglängsachse bereits durch geringe Momente erfolgen kann. Die dabei auftretenden Drehwinkel an den Enden der Querspange erreichen bei typischen Fahrzeugen (Normalspur) bis zu 1° während des normalen Fahrbetriebs. Typischerweise sind die Räder in je einem senkrechten Abschnitt des Schienenfahrzeugportalfahrwerks zugeordneten Radkasten angeordnet und diese Radkästen sind gegenüber dem jeweiligen senkrechten Abschnitt vertikal verschiebbar gelagert. Dadurch kann eine Federung des Portalfahrwerks realisiert werden. Dabei werden die auf die Räder wirkenden Kippmomente, hervorgerufen durch Querkräfte im Radaufstandspunkt (insbesondere bei Kurvenfahrt) von den Radkästen aufgenommen und in den Portalrahmen eingeleitet.

Ein weiterer Vorteil gegenständlicher Erfindung liegt in der Möglichkeit, allfällige Toleranzen des Portalrahmens ausgleichen zu können und die Spurweite nach erfolgter Montage des Portalfahrwerks sehr genau einstellen zu können. Dazu kann eine Spurweiteneinstellungsvorrichtung vorgesehen werden, welche vorteilhafterweise an den Befestigungsstellen der Querspange an den senkrechten Abschnitten des Portalrahmens (bzw. der Radkästen) angeordnet ist. Beispielsweise kann diese Spurweiteneinstellungsvorrichtung aus korrespondierenden Zahnplatten ausgeführt werden, welche eine Einstellung der Spurweite in Stufen, entsprechend der Zahnteilung, ermöglichen.

Das erfindungsgemäße Portalfahrwerk ist besonders vorteilhaft bei Straßenbahnen einzusetzen, da es einerseits ein äußerst niedriges Passagierraumbodenniveau bei möglichst großer Durchgangsbreite ermöglicht und andererseits extrem einfach herzustellen und zu montieren ist und im Betrieb die Querspange keinerlei Wartung erfordert.

### Kurzbeschreibung der Zeichnungen

Es zeigen beispielhaft:

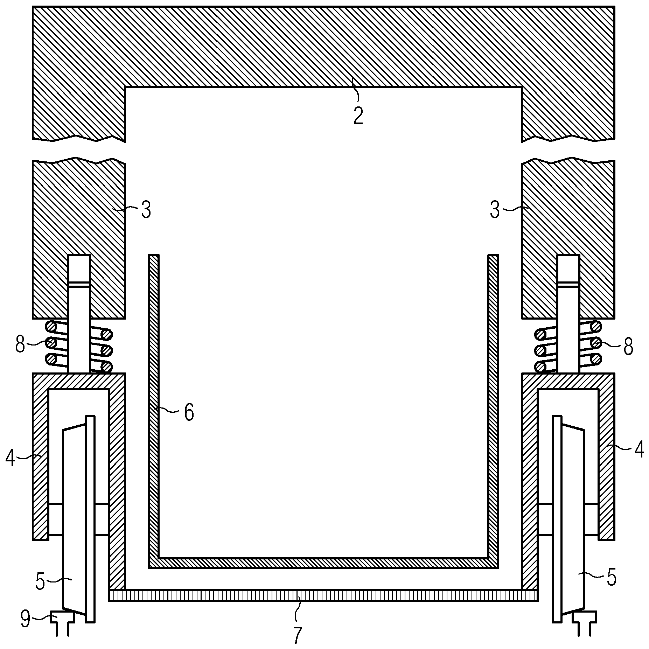

**Fig.1** Ein Schienenfahrzeugportalfahrwerk.

### Ausführung der Erfindung

**Fig.1** zeigt beispielhaft und schematisch ein Schienenfahrzeugportalfahrwerk. Es ist ein Schienenfahrzeugportalfahrwerk in einem Schnitt normal zur Längsachse eines Schienenfahrzeugs in Einbaulage dargestellt.

Das Schienenfahrzeugportalfahrwerk umfasst einen Portalrahmen 1 aus einem waagrechten Abschnitt 2 und zwei senkrechten Abschnitten 3. Die senkrechten Abschnitte 3 sind dabei waagrecht geschnitten dargestellt. An den der Schienenoberkante 9 zugewandten Enden der senkrechten Abschnitte 3 sind jeweils ein Radkasten 4 (Tragelement für die Achsstummel) vertikal verschiebbar und um die globale Längsachse des Schienenfahrzeugportalfahrwerks gegenüber dem Portalrahmen 1 verdrehsteif angeordnet und eine Federung 8 ist zwischen den senkrechten Abschnitten des Portalrahmens 3 und dem jeweils zugeordneten Radkasten 4 vorgesehen. Diese Federung 8 stellt in gezeigtem Ausführungsbeispiel die Primärfederung eines Schienenfahrzeugs dar. Ein Wagenkasten 6 ist in dem vom Portalrahmen 1 umschlossenen Raum angeordnet und mit dem Portalrahmen verbunden. Diese Verbindungsstellen, welche in konkreten Ausführungen als Sekundärfederung ausgebildet sind, sind in Fig.1 nicht dargestellt. In jedem Radkasten 4 ist jeweils ein Rad 5 gelagert. Diese Radlagerung übermittelt die auftretenden Kräfte und Momente über die Radkästen an den Portalrahmen 1 und die Querspange 7. Querkräfte im Radaufstandspunkt bewirken ein Aufweiten dieser im Wesentlichen U-förmigen Struktur des Portalrahmens 1, was zu einer Veränderung der Spurweite führt. Um diesem nachteiligen Effekt zu begegnen ist die Querspange 7 vorgesehen, welche die der Schienenoberkante 9 zugewandten Enden der Radkästen 4 verbindet und Zug- oder Druckkräfte zwischen den Radkästen 4 übermittelt. Gegenüber Biegebelastungen um die globale Längsachse des Schienenfahrzeugportalfahrwerks ist die Querspange 7 nachgiebig ausgeführt, sodass sie die bei asymmetrischem Einfedern auftretenden Verformungen elastisch aufnehmen kann. Die Verbindungsstellen zwischen der Querspange 7 und den der Schienenoberkante 9 zugewandten Enden der Radkästen 4 ist fest und lösbar ausgeführt, vorzugsweise mittels einer Schraubverbindung.

### Liste der Bezeichnungen

- 1: Portalrahmen
- 2: waagrechter Abschnitt
- 3: senkrechter Abschnitt
- 4: Radkasten
- 5: Rad
- 6: Wagenkasten
- 7: Querspange
- 8: Federung
- 9: Schienenoberkante

## Patentansprüche

1. Schienenfahrzeugportalfahrwerk, umfassend einen Portalrahmen (1) aus einem waagrechten (2) und zwei senkrechten Abschnitten (3) und an diesen senkrechten Abschnitten angeordnete Räder (5), **dadurch gekennzeichnet, dass**
die senkrechten Abschnitte (3) mittels einer blattfederartig ausgebildeten Querspange (7) fest und lösbar verbunden sind, wobei die Querspange (7) bei Betriebsbelastungen des Schienenfahrzeugs einer elastischen Verformung unterworfen ist.

2. Schienenfahrzeugportalfahrwerk nach Anspruche 1, **dadurch gekennzeichnet, dass** die Räder (5) in je einem, einem senkrechten Abschnitt (3) des Schienenfahrzeugportalfahrwerks zugeordneten Radkasten (4) angeordnet sind und diese Radkästen (4) gegenüber dem jeweiligen senkrechten Abschnitt (3) des Portalrahmens (1) vertikal verschiebbar und um die Längsachse des Schienenfahrzeugportalfahrwerks verdrehsteif gelagert sind.

3. Schienenfahrzeugportalfahrwerk nach einem der Ansprüche 1 oder 2, **dadurch gekennzeichnet, dass** die Enden der Querspange (7) bei Betriebsbelastungen des Schienenfahrzeugs Verdrehungen von bis zu 1° unterworfen sind.

4. Schienenfahrzeugportalfahrwerk nach einem der Ansprüche 1 bis 3, **dadurch gekennzeichnet, dass** die Querspange (7) plattenförmig ausgebildet ist.

5. Schienenfahrzeugportalfahrwerk nach einem der Ansprüche 1 bis 3, **dadurch gekennzeichnet, dass** die Querspange (7) als ein Biegestab ausgebildet ist.

6. Schienenfahrzeugportalfahrwerk nach einem der Ansprüche 1 bis 3, **dadurch gekennzeichnet, dass** die Querspange (7) aus mehreren Biegestäben aufgebaut ist.

7. Schienenfahrzeugportalfahrwerk nach einem der Ansprüche 1 bis 6, **dadurch gekennzeichnet, dass** an den Radkästen (4) und an den korrespondieren Befestigungsstellen an der Querspange (7) eine Spurweiteneinstellungsvorrichtung angeordnet ist.

8. Schienenfahrzeug, umfassend eine Mehrzahl aufeinanderfolgender, untereinander gekuppelter Wagen **dadurch gekennzeichnet, dass** mindestens ein Schienenfahrzeugportalfahrwerk nach einem der Ansprüche 1 bis 8 an einer Kuppelstelle angeordnet ist, wobei ein Passagierdurchang zwischen diesen Wagen durch den Portalrahmen gegeben ist.

9. Schienenfahrzeug nach Anspruch 8, **dadurch gekennzeichnet, dass** das Schienenfahrzeug eine Straßenbahn ist.

## Claims

1. Rail vehicle gantry chassis, comprising a gantry frame (1) consisting of a horizontal (2) and two vertical sections (3) and wheels (5) arranged on said vertical sections, **characterised in that**
the vertical sections (3) are connected in a fixed and detachable manner by means of a transverse crossbar (7) embodied in the manner of a flat spring, wherein the transverse crossbar (7) is subjected to an elastic deformation in the event of operating loads on the rail vehicle.

2. Rail vehicle gantry chassis according to claim 1, **characterised in that** the wheels (5) are each arranged in a wheel housing (4) assigned to a vertical section (3) of the rail vehicle gantry chassis and said wheel housings (4) are mounted such that they are vertically displaceable with respect to the respective vertical section (3) of the gantry frame (1) and are torsionally rigid about the longitudinal axis of the rail vehicle gantry chassis.

3. Rail vehicle gantry chassis according to one of claims 1 or 2, **characterised in that** the ends of the transverse crossbar (7) are subjected to contortions of up to 1° in the event of operating loads on the rail vehicle.

4. Rail vehicle gantry chassis according to one of claims 1 to 3, **characterised in that** the transverse crossbar (7) is embodied in a plate-shaped manner.

5. Rail vehicle gantry chassis according to one of claims 1 to 3, **characterised in that** the transverse crossbar (7) is embodied as a bending arm.

6. Rail vehicle gantry chassis according to one of claims 1 to 3, **characterised in that** the transverse crossbar (7) is constructed from a plurality of bending arms.

7. Rail vehicle gantry chassis according to one of claims 1 to 6, **characterised in that** a gauge adjustment apparatus is arranged on the wheel housings (4) and on the corresponding fastening points on the transverse crossbar (7).

8. Rail vehicle, comprising a plurality of successive, intercoupled carriages, **characterised in that** at least one rail vehicle gantry chassis according to one of claims 1 to 8 is arranged at a coupling point, wherein a passenger passageway between said carriages is given by the gantry frame.

9. Rail vehicle according to claim 8, **characterised in that** the rail vehicle is a tram.

## Revendications

1. Train de roulement à portique pour véhicule ferroviaire, comprenant un cadre de portique (1) formé d'une partie horizontale (2) et de deux parties verticales (3), et des roues (5) disposées sur ces parties verticales,
**caractérisé en ce que** les parties verticales (3) sont reliées solidement et de manière amovible au moyen d'une barre transversale (7) conçue à la manière d'un ressort à lame, dans lequel la barre transversale (7) est soumise à une déformation élastique sous des charges de service du véhicule ferroviaire.

2. Train de roulement à portique pour véhicule ferroviaire selon la revendication 1, **caractérisé en ce que** les roues (5) sont disposées dans un passage de roue (4) respectif associé à une partie verticale (3) du train de roulement à portique pour véhicule ferroviaire et ces passages de roue (4) peuvent être déplacés verticalement par rapport à la partie verticale (3) respective du cadre de portique (1) et sont montés de manière rigide en torsion autour de l'axe longitudinal du train de roulement à portique pour véhicule ferroviaire.

3. Train de roulement à portique pour véhicule ferroviaire selon l'une des revendications 1 ou 2, **caractérisé en ce que** les extrémités de la barre transversale (7) sont soumises à des torsions jusqu'à 1° sous des charges de service du véhicule ferroviaire.

4. Train de roulement à portique pour véhicule ferroviaire selon l'une des revendications 1 à 3, **caractérisé en ce que** la barre transversale (7) est configurée en forme de plaque.

5. Train de roulement à portique pour véhicule ferroviaire selon l'une des revendications 1 à 3, **caractérisé en ce que** la barre transversale (7) est configurée sous forme d'une barre de flexion.

6. Train de roulement à portique pour véhicule ferroviaire selon l'une des revendications 1 à 3, **caractérisé en ce que** la barre transversale (7) est constituée de plusieurs barres de flexion.

7. Train de roulement à portique pour véhicule ferroviaire selon l'une des revendications 1 à 6, **caractérisé en ce qu'**un dispositif de réglage de largeur de voie est disposé sur les passages de roue (4) et sur les pièces de fixation correspondantes sur la barre transversale (7).

8. Véhicule ferroviaire, comprenant une pluralité de wagons successifs accouplés entre eux, **caractérisé en ce qu'**au moins un train de roulement à portique pour véhicule ferroviaire selon l'une des revendications 1 à 8 est disposé à un point d'accouplement, dans lequel une passerelle pour voyageurs entre ces wagons est fournie par le cadre de portique.

9. Véhicule ferroviaire selon la revendication 8, **caractérisé en ce que** le véhicule ferroviaire est un tramway.
